# EUROPEAN PATENT APPLICATION

(11) **EP 1 224 867 A1**
(43) Date of publication of application: **24.07.2002**
(21) Application number: 00963042.7
(22) Date of filing: 02.10.2000
(51) Int. Cl.: A23C 9/12, A23C 11/10

(54) **FERMENTED FOODS CONTAINING BIFIDOBACTERIUM**

(30) Priority: 28.10.1999 JP 30738199; 28.10.1999 JP 30738299
(71) Applicant: Kabushiki Kaisha Yakult Honsha, Minato-ku, Tokyo 105-8660 (JP)
(72) Inventor: MATSUKI, Takahiro, Minato-ku, Tokyo 105-8660 (JP); SONOIKE, Koichiro, Minato-ku, Tokyo 105-8660 (JP); YASUDA, Emi, Minato-ku, Tokyo 105-8660 (JP); IINO, Tohru, Minato-ku, Tokyo 105-8660 (JP); ISHIKAWA, Fumiyasu, Minato-ku, Tokyo 105-8660 (JP); TOCHIYA, Kaoru, Minato-ku, Tokyo 105-8660 (JP)
(74) Representative: Hartz, Nikolai F., Dr.
(86) International application number: JP0006841
(87) International publication number: WO0130167

(57) **Abstract**

Fermented foods having a sufficient stability and an excellent flavor as foods to be taken orally are produced by using a bifidobacterium belonging to *Bifidobacterium catenulatum* or *Bifidobacterium pseudocatenulatum* which has never been employed in foods so far. These fermented foods containing a bifidobacterium are obtained by fermenting a medium containing soybean milk as the main component by using a bifidobacterium selected from *Bifidobacterium catenulatum* and *Bifidobacterium pseudocatenulatum*.

## Description

### Technical Field

This invention relates to bifidobacteria-containing fermented foods, and more specifically to bifidobacteria-containing fermented foods each of which is available from fermentation of a culture medium, which comprises milk or soybean milk as a principal ingredient, by a bifidobacterium belonging to the species of *Bifidobacterium catenulatum* or *Bifidobacterium pseudocatenulatum.*

### Background Art

Bifidobacteria are useful bacteria, which are found in the intestinal tract of humans and are known to have growth inhibiting effects on pathogenic germs owing to a drop in the intestinal pH by formation of organic acid and physiological effects such as suppression of formation of toxic substances, promotion of digestion and absorption and immunopotentiation ("Study on Bifidobacteria" compiled and edited by Tomotari Mitsuoka; etc.).

However, bifidobacteria are generally accompanied by a problem in that, compared with production of fermented milk foods by fermentation of milk by lactobacilli or the like, difficulties are involved in the production and quality control of fermented foods.

A variety of attempts have therefore been made to produce fermented foods by bifidobacteria, resulting in proposals of addition of bifidobacterium growth factors and also of mix culture by combined use of one or more of certain specific lactobacilli and the like.

In recent years, it is also increasingly practiced to produce, as fermented foods, fermented soybean milk products by fermentation of so-called soybean milk, pressed-out juice of soybeans, in addition to fermented milk foods produced by using animal milk led by cow milk.

Bifidobacteria, use of which for fermented foods such as fermented milk foods or fermented soybean milk foods has been proposed to date, are primarily *Bifidobacterium breve, Bifidobacterium bifidum, Bifidobacterium longum, Bifidobacterium infantis,* and *Bifidobacterium adolescentis*.

Products which have been put on the market, for example, as fermented milk products are all limited to those making use of *Bifidobacterium breve, Bifidobacterium bifidum, Bifidobacterium longum, Bifidobacterium animalis or Bifidobacterium lactis*.

Concerning fermented soybean milk products, on the other hand, practically no products have been put on the market, because soybean milk has its own characteristic flavor and many of such fermented soybean milk products involve flavor problems to be solved although compared with animal milk, soybean milk tends to permit relatively easier retention of a viable cell count and its fermentation itself tends to be easier.

In the meantime, the present inventors have proceeded with research on the distribution of bifidobacteria in the intestinal tract of human adults. Recently, it has been ascertained that bifidobacteria belonging to the species of *Bifidobacterium catenulatum* and *Bifidobacterium pseudo-catenulatum* are most common species [Matsuki et al., "Appl. Environ. Microbiol.", 65(10), 4506-452 (1999)].

It has been a conventional practice to form a living lactobacillus or bifidobacterium, for example, into fermented milk food and to take it. A main object of this is to supplement or increase a lactobacillus or bifidobacterium, which has decreased in the intestinal tract, in expectation of health preserving effects or physiologic function activating effects possessed by a similar lactobacillus or bifidobacterium existing in the intestine. It is also important for the fermented milk food that, since it is orally taken as food, it must be satisfactory in flavor, to say nothing of stability in properties.

Bifidobacteria, which belong to the above-described species of *Bifidobacterium catenulatum* or *Bifidobacterium pseudocatenulatum* and exist in the intestinal tract, are also expected to bring about such effects when they are taken. All the same, absolutely no reports have been made on the production of fermented foods making use of the bacteria, much less their use as fermented foods.

An object of the present invention is therefore to produce a novel fermented food, which is easy to deal with and has excellent flavor, by using the above-described bifidobacterium which has not been used for fermented foods.

### Disclosure of the Invention

With a view to obtaining fermented foods making use of bifidobacteria which belong to the species of *Bifidobacterium catenulatum* or *Bifidobacterium pseudocatenulatum* and have not been used in foods to date, the present inventors have proceeded with extensive research. As a result, they have now succeeded in obtaining fermented foods each of which stably contain one or more of these bifidobacteria in a large cell count and also has good flavor as fermented food.

Accordingly, the present invention provides bifidobacteria-containing fermented food which is available from fermentation of a culture medium, which comprises milk or soybean milk as a principal ingredient, by a bifidobacterium selected from the species of *Bifidobacterium catenulatum* or *Bifidobacterium pseudocatenulatum.*

The present invention also provides bifidobacteria-containing fermented food as described above, wherein after filled in a sealed container and stored at 10°C for 14 days, a cell count of the bifidobacterium selected from the species of *Bifidobacterium catenulatum* or *Bifidobacterium pseudocatenulatum* is 1 x 10⁷ CFU/mL or greater..

The present invention also provides bifidobacteria-containing fermented milk food, wherein a culture medium comprising milk as a principal ingredient is fermented under anaerobic conditions such that pH does not drop beyond 3.6.

The present invention also provides bifidobacteria-containing fermented soybean milk food, wherein a culture medium comprising soybean milk as a principal ingredient is fermented under anaerobic conditions such that pH does not drop beyond 3.0.

The present invention also provides bifidobacteria-containing fermented food as described above, which is filled in a sealed container.

### Best Modes for Carrying Out the Invention

*Bifidobacterium catenulatum* usable for the bifidobacteria-containing fermented food according to the present invention is a strain isolated from human adult feces or the like and identified by Scardovi et al in 1974 [Scardovi Y. and F. Crociani; "Int. J. Syst. Bacteriol.", **24**, 6-20, (1974)], while *Bifidobacterium pseudocatenulatum* is a strain isolated from human infant feces or the like and identified also by Scardovi et al in 1979 [Scardovi Y., L.D. Trovatelli, B. Biavati and G. Zani; "Int. J. Syst. Bacteriol.", 291-311, (1979)].

In the present invention, no particular limitation is imposed on the bifidobacterium which is usable for the production of the fermented food and belongs to the species of *Bifidobacterium catenulatum* or *Bifidobacterium pseudocatenulatum* (hereinafter, both of the species may collectively called "the bifidobacterium useful in the present invention"), and any bifidobacterium can be used insofar as it has milk or soybean milk fermenting ability and no problem is involved in the flavor of the resultant fermented food.

According to the research by the present inventors, the above-described bifidobacterium useful in the present invention all have growth capacity sufficient to produce fermented foods when inoculated to and incubated in a culture medium comprising milk as a principal ingredient or a culture medium comprising soybean milk as a principal ingredient, and moreover, the fermented foods have excellent flavor.

Incidentally, no absolute limitation is imposed on a method for isolating a bifidobacterium, which is useful in the present invention, from a sample containing various bifidobacteria and then identifying the same, and their discrimination is feasible by a DNA-DNA homology test or the like. For example, use of a method already proposed by the present inventors, said method making use of a strain specific primer for a 16SrRNA gene as a target (JP 11-123093 A), makes it possible to achieve simple and easy identification by extracting a DNA from a colony directly or from cultured cells and investigating reactivity of the DNA with a primer specific to *Bifidobacterium catenulatum* or *Bifidobacterium pseudocatenulatum.*

This primer was prepared by being interested in the strain-specific gene arrangements at the areas V2,V3 out of the variable regions which exist at nine locations in total in the 16SrRNA gene of the genus of *Bifidobacterium*. Use of this primer makes it possible to easily differentiate the species of *Bifidobacterium catenulatum* or *Bifidobacterium pseudocatenulatum* from the other strains, although this differentiation is difficult by the saccharolytic property test which has been used conventionally.

To obtain the fermented food in the present invention, it is only necessary to culture a bifidobacterium, which is useful in the present invention, in a culture medium comprising milk as a principal ingredient (hereinafter called a "milk medium") or a culture medium comprising soybean milk as a principal ingredient (hereinafter called a "soybean milk medium") by a general fermentation process for bifidobacteria. For example, as the milk medium, milk, whole milk powder, skim milk, milks reconstituted from these milk powders, which are generally employed to culture lactobacilli and have milk solid contents of from 8 to 25 wt.% or so, are all usable. As soybean milk medium, soybean milk which is generally used as a soybean milk drink and has a solid content of from 3.0 to 15 wt.% or so can be used.

Although not absolutely necessary in the present invention, a bifidobacterium growth promoting substance such as a yeast extract, said substances being to serve as a fermentation aid, and a reducing agent such as L-ascorbic acid can also be used in the milk or soybean milk medium to extents not adversely affecting the flavor. In the milk medium, it is also possible to use soybean peptide as the fermentation aid.

Further, no particular limitation is imposed on culture conditions for obtaining the fermented food of the present invention, because fermentation can be conducted under either aerobic conditions or anaerobic conditions irrespective of the culture medium. In the case of a milk medium, for example, it is desired to conduct fermentation under anaerobic conditions, the oxygen content of which is preferably about 10 ppm or lower, at a temperature of from 30 to 40°C or so until the pH falls within a range up to 3.6, preferably within a range of from 4.3 to 5.5 or so.

In the case of a soybean milk medium, it is desired to conduct fermentation under anaerobic conditions, the oxygen content of which is preferably about 10 ppm or lower, at a temperature of from 33 to 38°C or so until the pH falls within a range up to 3.0, preferably within a range of from 4.5 to 5.5 or so.

Needless to say, bifidobacteria useful in the present invention, that is, bifidobacteria of the species of *Bifidobacterium catenulatum* and bifidobacteria of the species of *Bifidobacterium pseudocatenulatum* can be used either singly or in combination in the present invention. Insofar as the fermentation by the bifidobacterium useful in the present invention is not interfered, it is also possible to conduct mix culture by making combined use of one or more of other bifidobacteria (*Bifidobacterium breve, Bifidobacterium bifidum, Bifidobacterium longum, Bifidobacterium infants, Bifidobacterium adolescentis*, and the like), lactobacilli (*Lactobacillus casei, Lactobacillus bulgaricus, Lactobacillus acidophilus, Lactobacillus delbrueckii ss. bulgaricus, Lactobacillus fermentum, Lactobacillus helveticus, Lactobacillus plantum, Lactoccus lactis ss. cremoris, Lactoccus lactis ss. lactis, Leuconostoc lactis, Leuconostoc cremoris, Leuconostoc mesenteroides, Streptococcus thermophilus,* and the like), and yeasts (*Candida kefir, Candida sterata, Candida tropicalis, Candida utilis, Candida zeylanoides, Kluyveromyces marxianus var. marxianus, Kluyveromyces lactis, Pichia anomala, Pichia membranaefaciens, Rhodotorula glutinis, Rhodotorula rubra, Saccharomyces cerevisiae, Saccharomyces bayanus, Saccharomyces unispolas, Zygosaccharomyces bailli,* *Zygosaccharomyces rouxii*, and the like).

A fermented product, which has been obtained by fermentation with a bifidobacterium useful in the present invention, can be provided for food by filling it in various containers, desirably containers having a low oxygen permeability (for example, 100 mL/m²/24 hr or lower, more preferably 10 mL/m²/24 hr or lower) either as is or after adding separately-cultured fermented milk, sweetener (sucrose, fructose, oligosaccharide, sugar alcohol or the like), fruit juice, water, flavor or essence, stabilizer, gelling agent and/or the like as needed. Specifically, the fermented product can be provided as yoghurt, drink yoghurt, lactobacillus beverages, cheese, frozen yoghurt, soybean milk yoghurt, drink soybean milk yoghurt, soybean milk cheese, frozen soybean milk yoghurt and the like.

Further, the resulting fermentation product can also be processed into powder or tablets by adding an excipient to the fermentation product as needed and then drying the thus-obtained mixture in a manner not causing death of the bacteria.

### Examples

The present invention will next be described in further detail by test and examples. It should however be borne in mind that the present invention is by no means limited to or by these examples.

### Test 1

### Fermenting Ability on Milk Medium

A milk medium, which had been prepared by adding 0.03% of an yeast extract to 10% skim milk powder, was sterilized at 100°C for 30 minutes, and was then poured in 250-mL aliquots into 300-mL culture bottles. After the milk medium in the respective culture bottles was inoculated at 1% by various bifidobacteria shown below in Table 1, cotton plugs were applied to the culture bottles, followed by static incubation at 37°C for 24 hours. Their viable cell counts were then determined. Further, those samples were stored at 10°C for 15 days. During the storage, their viable cell counts were also determined on Day 3, Day 7 and Day 15. With respect to the samples stored for 15 days, their pH measurement and flavor evaluation were also conducted. The results of these tests are also shown in Table 1.

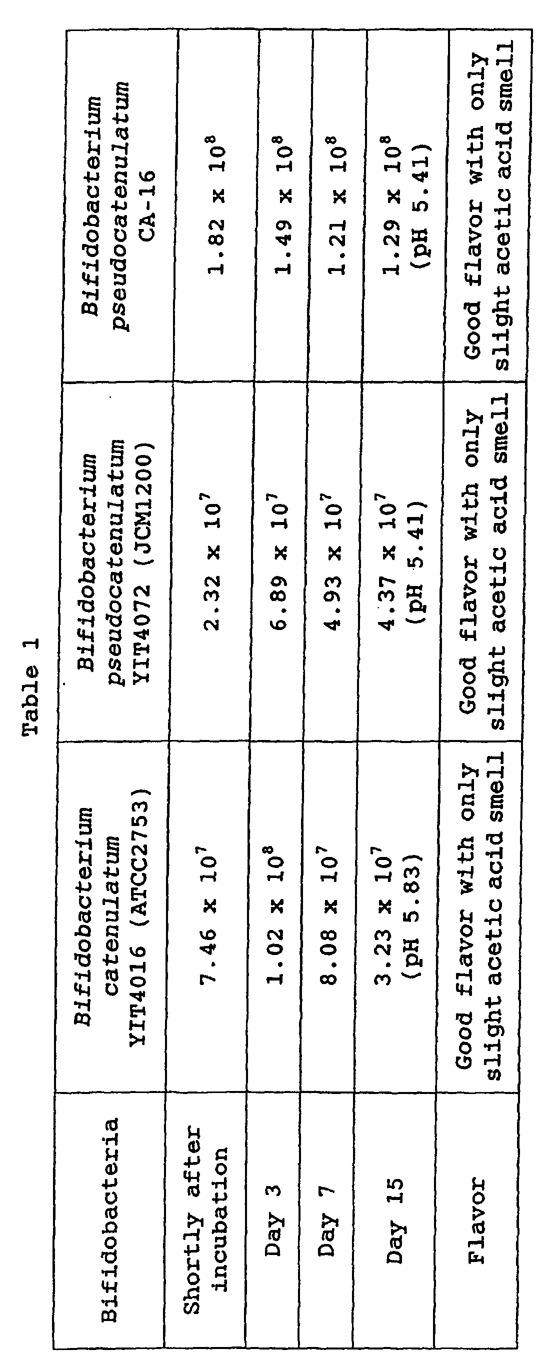

As is evident from these results, the bifidobacterium of the species of *Bifidobacterium catenulatum* and the bifidobacteria of the species of *Bifidobacterium pseudocatenulatum* all grew well in the milk medium and had good viability even after storage. Further, the samples had flavor with only a slight acetic acid taste and were excellent as fermented milk food.

### Example 1

### Preparation of Fermented Milk Food

*Bifidobacterium pseudocatenulatum* (JCM1200) was inoculated at 1% to a milk medium (whole milk powder: 6 W/V%, skim milk powder: 13 W/V%) to which 0.05% of a yeast extract had been added. After a cotton plug was applied, the milk medium was statically cultured at 37°C for 24 hours. The fermentation product so obtained had pH 5.3 and a viable cell count of 4.52 x 10⁷ CFU/mL.

After water was added to 450 g of the fermentation product and 150 g of a syrup to give a total weight of 1,000 g, the resultant mixture was filled in a sealable container, whereby fermented milk food was prepared. When a flavor evaluation was conducted, the fermented milk food so obtained was found to have good flavor with only slight acetic acid smell. Further, its viable cell count was good even after storage.

### Test 2

### Fermenting Ability on Soybean Milk Medium

Soybean milk the solid content of which was 12% was sterilized with steam at 100°C for 90 minutes, and then poured in 300-mL aliquots in 500-mL culture bottles. After the soybean milk medium in the respective culture bottles was inoculated at 1.0% by various bifidobacteria useful in the present invention and shown below in Table 2, the culture bottles were sealed with butyl rubber plugs, followed by static incubation at 37°C for 24 hours or 48 hours. Their viable cell counts were then determined after the respective incubation times. Further, those incubated for 24 hours were stored at 10°C for 14 days. With respect to the samples after the storage, their viable cell count determination and flavor evaluation were conducted. The results of these tests are also shown in Table 2.

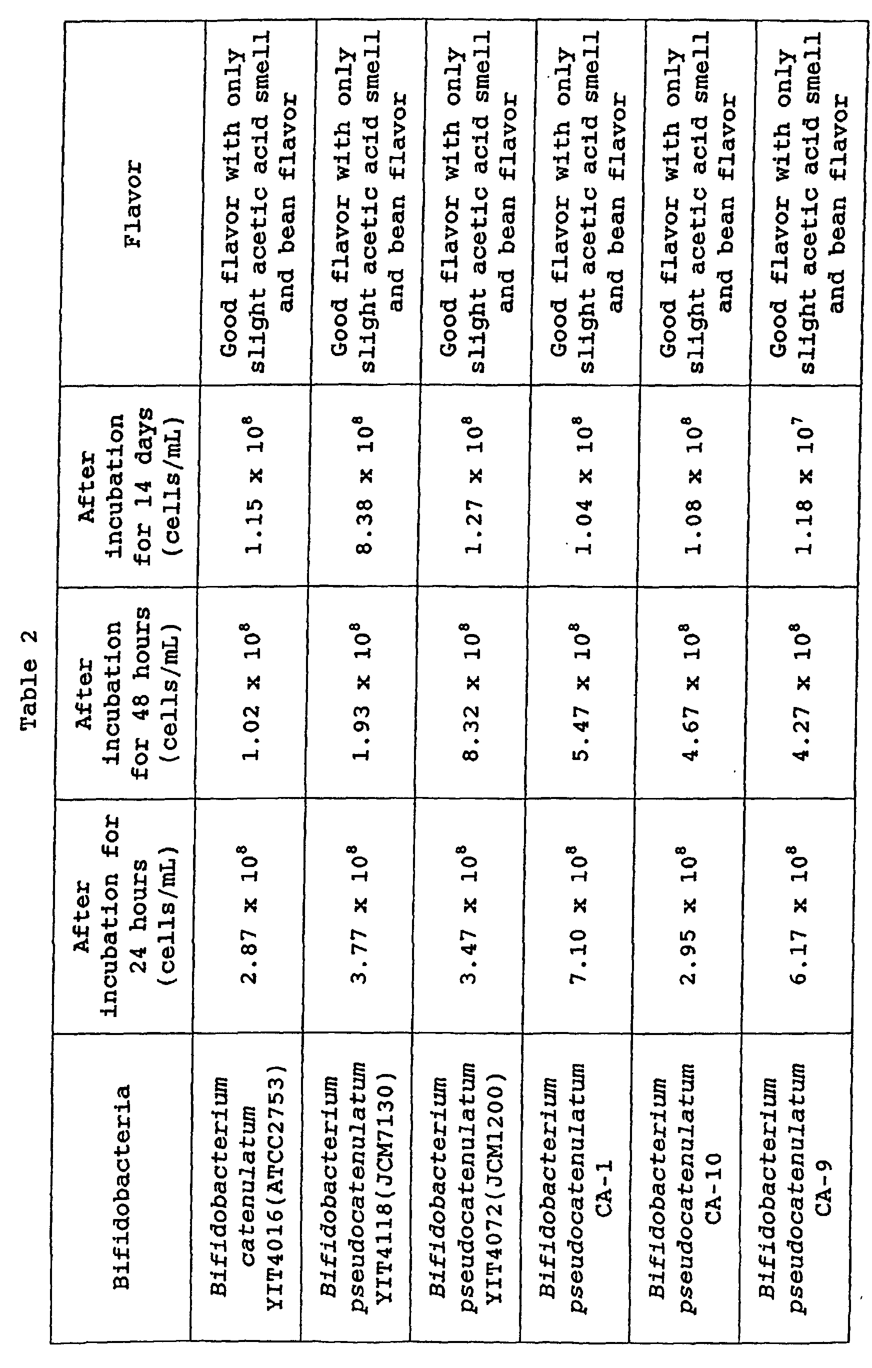

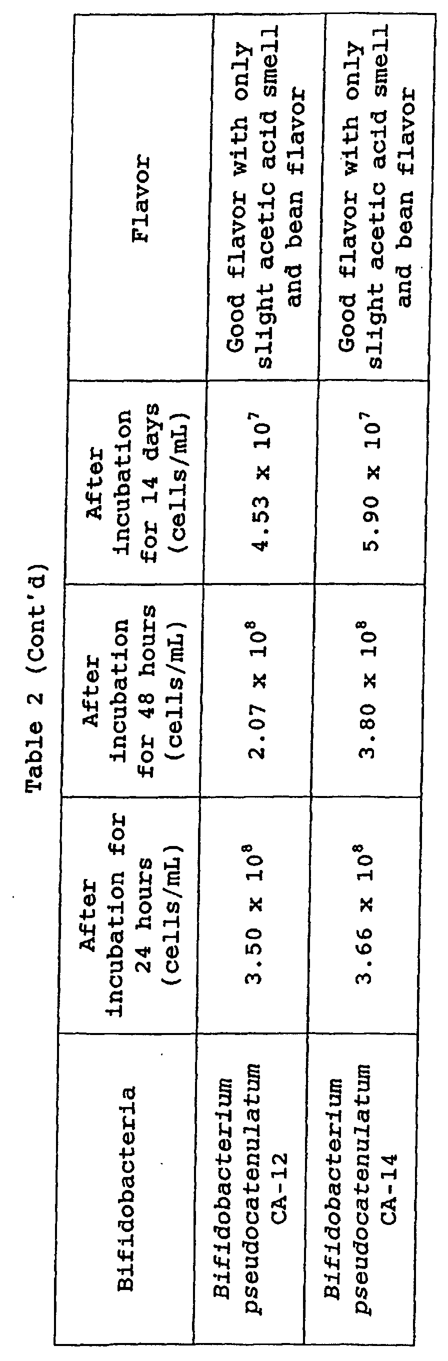

The bifidobacteria useful in the present invention all grew well in the soybean milk medium and had good viability even after storage.

Further, the samples had flavor without any soybean flavor of soybean milk and with refreshing yoghurt-like flavor and had only a slight puckery taste of soybean milk, and were excellent as fermented soybean milk foods.

### Example 2

### Preparation of Fermented Soybean Milk Food

To sterilized soybean milk which had been obtained by sterilizing soybean milk (solid content: 12%) with steam at 100°C for 90 minutes, *Bifidobacterium catenulatum* (ATCC27593) which had been subcultured beforehand through several cycles was inoculated at 1%. The culture bottle was sealed with a butyl rubber plug, followed by static incubation 37°C for 24 hours. The fermented product so obtained had pH 4.6 and a viable cell count of 3 x 10⁸ CFU/mL.

After 7% sucrose was added to and mixed with the fermentation product, the resultant mixture was filled in an oxygen-impervious sealable container, whereby fermented soybean milk food was prepared. A flavor evaluation was conducted. The fermented soybean milk food so obtained was found to have refreshing yoghurt-like flavor of fermentation with only slight bean flavor. After the fermented soybean milk food was stored at 10°C for 14 days, the viable cell count was 2 x 10⁸ CFU/mL.

### Industrial Applicability

The present invention has made it possible to obtain fermented foods, which can be very easily dealt with and have excellent flavor, by using a bifidobacterium which is classified to either the species of *Bifidobacterium catenulatum* or the species of *Bifidobacterium pseudocatenulatum* and has not been used in foods to date.

Further, fermented products according to the present invention contain a bifidobacterium which is useful in the present invention and is a most dominant strain in the intestinal tract of human adults. By eating or drinking the fermented products, the bifidobacterium useful in the present invention can therefore be taken alive, so that excellent physiological effects can be expected.

## Claims

1. Bifidobacteria-containing fermented food available from fermentation of a culture medium, which comprises milk or soybean milk as a principal ingredient, by a bifidobacterium selected from the species of *Bifidobacterium catenulatum* or *Bifidobacterium pseudocatenulatum.*

2. Bifidobacteria-containing fermented food as described in claim 1, wherein said culture medium is a culture medium comprising milk as a principal ingredient.

3. Bifidobacteria-containing fermented food as described in claim 1, wherein said culture medium is a culture medium comprising soybean milk as a principal ingredient.

4. Bifidobacteria-containing fermented food as described in claim 1, wherein after filled in a sealed container and stored at 10°C for 14 days, acell count of said bifidobacterium selected from the species of *Bifidobacterium catenulatum* or *Bifidobacterium pseudocatenulatum* is 1 x 10⁷ CFU/mL or greater.

5. Bifidobacteria-containing fermented milk food according to claim 2, wherein fermentation is conducted under anaerobic conditions such that pH does not drop beyond 3.6.

6. Bifidobacteria-containing fermented milk food according to claim 3, wherein fermentation is conducted under anaerobic conditions such that pH does not drop beyond 3.0.

7. Bifidobacteria-containing fermented food as described in any one of claims 1-6, which is filled in a sealed container.
